# EUROPEAN PATENT SPECIFICATION

(11) **EP 3 305 926 B1**
(45) Date of publication and mention of the grant of the patent: **24.07.2019**
(21) Application number: 16192420.4
(22) Date of filing: 05.10.2016
(51) Int. Cl.: C22C 21/06, B23K 20/12, C22C 21/10

(54) **WELDED STRUCTURAL MEMBER AND METHOD OF MANUFACTURING AND USE THEREOF**
GESCHWEISSTES KONSTRUKTIONSTEIL SOWIE VERFAHREN ZU SEINER HERSTELLUNG UND VERWENDUNG
ÉLÉMENT STRUCTUREL SOUDÉ ET PROCÉDÉ DE FABRICATION ET D'UTILISATION DE CELUI-CI

(43) Date of publication of application: 11.04.2018
(73) Proprietor: Aleris Rolled Products Germany GmbH, 56070 Koblenz (DE)
(72) Inventor: Landgraf, Florian, 56070 Koblenz (DE); Meyer, Philippe, 56070 Koblenz (DE); Bürger, Achim, 56070 Koblenz (DE); Spangel, Sabine Maria, 56070 Koblenz (DE)
(74) Representative: Müller Schupfner & Partner Patent- und Rechtsanwaltspartnerschaft mbB

(56) References cited:
- EP-A1- 0 829 552
- US-A1- 2003 219 353
- US-A1- 2007 128 463

## Description

### FIELD OF THE INVENTION

The present invention relates to welded aluminium alloy members and more particularly to a welded structural member comprising two or more parts of different alloys and tempers. These welded structural members may be used, for example, in an aircraft construction. Furthermore, the invention relates to a method of manufacturing such a welded structural member and to the use of an aluminium alloy in such a welded structural member.

### BACKGROUND OF THE INVENTION

It is generally known that when manufacturing semi-finished products and structural elements for aeronautical construction, certain required properties generally cannot be optimized at the same time independently of one another. This is sometimes the case with respect to "static mechanical properties" (particularly the ultimate tensile strength UTS and the yield stress YS), on the one hand, and properties relating to for example "damage tolerance" (particularly toughness and resistance to fatigue crack propagation) or mine blast resistance on the other hand. For each contemplated use of a structural element, a proper balance between static mechanical properties and damage tolerance properties needs to be defined. This is known as "property balance". Additional properties, such as corrosion resistance, can also be included in the property balance, as required, and in some cases, it may even be necessary to define a balance of two or more properties within the static mechanical properties or within the damage tolerance properties, such as yield strength and elongation which tend to be conflicting. The need for optimizing the property balance is particularly strong with respect to parts or structural members where the best results are obtained when static mechanical properties are optimized on one geometric end and damage tolerance is optimized on the other geometric end. Typically, top skin covers of an aircraft wing are optimized for static mechanical properties and bottom skin covers are optimized for damage tolerance. During the past few years, new alloys have been developed for top and bottom skin panels and the difference of properties between the panels is getting more and more pronounced. In spars, which are connected to both the top skin panel and the bottom skin panel, it would be of great interest to optimize the upper part for static mechanical properties and the bottom part for damage tolerance. However, since spars are made from one mono-alloy in one temper for unwelded integral structures, a choice has to be made as to which properties to optimize.

Currently AA7050 in the T76 temper or AA7475 in the T73 temper are typically chosen to take advantage of the best compromise between the yield stress and toughness offered by this alloy and whereby typically an aircraft spar is milled down from a thick plate material. In order to separately optimize the upper and lower part of, for example, a spar, it has been proposed to manufacture the spar from two different metals. A mechanically fastened structure can be made, but is expensive. It has been proposed to join the structure by welding.

Among welding techniques, two main families may be distinguished. In fusion welding processes, such as resistance spot welding, flash butt welding, laser welding, arc welding or electron-beam welding, the weld is made in the liquid phase above the melting point. In friction welding, where relative movement of the parts to be welded generates heat for joining and in friction stir welding, where a non-consumable rotating tool moves along the joint between two components to generate heat for joining, the weld is made below the melting point, in the solid phase.

Whatever welding technique is used, heat is generated and welding has usually a detrimental effect on the properties of the different metals by decreasing strength in the weld as well as in the zone adjacent to the weld referred to herein as the "heat-affected zone". However, fusion welding techniques do behave differently and many alloys, such as most 2XXX, including AlCuLi alloys, and 7XXX aluminium alloys series, that cannot be welded reliably by fusion welding techniques, in particular when in the form of plate, may be joined by friction welding or friction stir welding.

Patent document WO-98/58759-A1 (British Aerospace) discloses a method for manufacturing airframe components by joining two components by friction stir welding. Structural airframe components such as wing skin panels, wing spars, and wing ribs may be obtained with the method in this patent application. Hybrid billets of aluminium alloys comprising for example a 7XXX-series alloy friction stir butt welded to 2XXX-series are described. However, no indication is provided in this patent document on how to solve the metallurgical difficulties associated with friction stir welding of age-hardenable aluminium alloys. In particular, the low strength and low corrosion resistance of the heat-affected zone are not discussed.

Patent document US-8,420,226 (Constellium) discloses a welded structural member comprising a 7XXX-series alloy part, preferably made from AA7040 or AA7449, and a 2XXX-series alloy part, wherein each of the parts are pre-aged prior to being welded by means of friction stir welding, and wherein the structural member has undergone a post-welding thermal treatment conferring a final temper to each of the 7XXX-series and 2XXX-series alloy parts. The final temper is the result of the combined pre-aging and of the post welding heat treatment. The final temper is said to be optimized for at least the 7xxx-series alloy part to provide highest ultimate strength.

There is a need for a welded structural member and for a method of manufacturing such a welded structural member by welding two or more aluminium alloy parts displaying different property balances without significantly damaging properties of the aluminium alloy parts such as static mechanical properties and/or damage tolerance and/or corrosion resistance in the weld, in the heat-affected zone and/or in zones that are not affected by welding.

### SUMMARY OF THE INVENTION

It is an object of the present invention to provide a welded structural member comprising at least two aluminium alloy parts displaying different property balances. It is another object of the present invention to provide a method of manufacturing such a welded structural member of at least two aluminium alloy parts displaying different property balances.

This and other objects and further advantages are met or exceeded by the present invention providing welded structural member comprising at least two aluminium alloy parts displaying different property balances, said at least two parts being welded, wherein at least one of said at least two parts comprises a 7xxx-series alloy part aged to a final T7-condition, and wherein at least one of said at least two parts comprises a 5xxx-series alloy part in a Hx-temper with x being 1, 2 or 3, and having a yield strength in the range of 170 to 300 MPa and an ultimate tensile strength in a range of 330 to 370 MPa, and wherein at least the 7xxx-series part is selected to impart strength properties to said welded structural member including after an optional post-welding heat treatment, and at least the 5xxx-series part is selected such that the temper is optimized to provide damage tolerance or mine blast protection to said welded structural member, wherein said welded structural member has undergone optionally a post-welding heat treatment conferring a sensitization of any of the welded 5xxx-series alloy parts and without substantially affecting the final T7 condition of the 7xxx-series alloy part, wherein the said structural member comprises a spar or a rib suitable for use in aircraft construction.

The optional post-welding heat treatment may be used the fine tune the corrosion of the welded structural member. While the corrosion resistance of the 5000-series alloy against intergranular corrosion may slightly decrease, the corrosion resistance against stress corrosion and exfoliation corrosion of this part and the corrosion resistance of the 7000-series alloy part against intergranular corrosion will increase in comparison to the as-welded condition.

### BRIEF DESCRIPTION OF THE DRAWINGS

The invention shall also be described with reference to the following drawings, in which:
Fig. 1 shows a perspective view of a welded structural member according to the invention;
Fig. 2 shows a flow chart illustrating the steps of manufacturing a welded structural member according to the prior art disclosed in US-8,420,226;
Fig. 3 shows a flow chart illustrating the steps of manufacturing a welded structural member according to this invention.

### DETAILED DESCRIPTION OF THE PREFERRED EMBODIMENTS

As will be appreciated herein below, except as otherwise indicated, aluminium alloy designations and temper designations refer to the Aluminium Association designations in Aluminium Standards and Data and the Registration Records, as published by the Aluminium Association in 2016 and well known to the persons skilled in the art. The temper designations are laid down in European standard EN515. Unless otherwise indicated, the static mechanical characteristics, in other words the ultimate tensile strength (UTS, also designated as Rm), the tensile yield strength (YS, also designated as TYS or Rp0.2), the elongation at fracture A and the elongation at necking Ag, of the metal sheets or plates are determined by a tensile test according to standard EN 10002-1. Unless otherwise indicated, the definitions given in the European Standard EN 12258-1 apply. The term "sheet" means a rolled product not exceeding about 6 mm in thickness. "Medium plate" is a rolled product from about 6 mm to about 30 mm in thickness, and "thick plate" is a rolled product typically above about 30 mm in thickness. "Plate" includes "medium plate" and "thick plate".

The term "structural member" refers to a component used in mechanical construction for which the static and/or dynamic mechanical characteristics are of particular importance with respect to structure performance, and for which a structure calculation is usually prescribed or undertaken. These are typically components the rupture of which may seriously endanger the safety of the mechanical construction, its users or third parties. In the case of an aircraft, structural members comprise members of the fuselage (such as fuselage skin), stringers, bulkheads, circumferential frames, wing components (such as wing skin, stringers or stiffeners, ribs, spars), empennage (such as horizontal and vertical stabilisers), floor beams, seat tracks, and doors.

For the purposes of the present invention, "integral structure" means the structural part of an aircraft that was designed to achieve material continuity over the largest possible size in order to reduce the number of mechanical assembly points. An integral structure may be made either by in-depth machining, or by the use of shaped parts, for example obtained by extrusion, forging or casting, or by welding of structural members made of weldable alloys. A "mechanically fastened structure" means a structure in which the thin or thick plates are fixed depending on the destination of the structural member (for example a fuselage member or a wing member). Fixing is usually accomplished by riveting, onto stiffeners and/or frames (that can be made by machining from extruded or rolled products).

In the 7xxx-series alloy part, exfoliation corrosion was determined by an EXCO type test according to ASTM G34 and intergranular corrosion by an IGC type test according to ASTM G110. In the 5xxx-series alloy part, exfoliation corrosion was determined by an ASSET type test according to ASTM G66 and intergranular corrosion by a NAMLT type test according to ASTM G67. The welded joint was tested by all four kinds of tests. For the whole welded structural member SCC was tested according to ASTM G47.

The welded structural member according to the invention provides a careful balance in relevant engineering properties whereby the 7xxx-series alloy part provides most of the strength to the welded structural member, the 5XXX-series alloy part provides the required fatigue crack growth rate resistance and S/N fatigue resistance, and wherein both the 7XXX-series alloy and the 5XXX-series alloy have a good corrosion resistance. The two alloy parts have closely related or similar corrosion potentials, hence the risk on contact corrosion is minimised in any contact zone of the two alloy parts. The optional post-weld heat treatment is to ensure that the whole welded structural member has in all distinctive zones such as the weld and the heat-affected zone a sufficient good corrosion resistance.

In accordance with the invention the 7XXX-series alloy part is already in the final temper T7 prior to be welded and whereby any optional post-weld heat-treatment is such that any over-ageing occurring in the 7XXX-series alloy part does not substantially change the pre-welding T7 condition.

By final temper, it is meant the temper obtained prior to any optional post-welding heat treatment. As such the final temper provides the desired balance in strength and corrosion resistance and is the result of the pre-aging and any post-welding heat treatment is not to substantially change this temper. Tempers within the scope of the present invention include, but are not limited to, T tempers (thermally treated to produce tempers other than F, O or H) and even more precisely solution heat treated and overaged/stabilised T7 tempers, and even more precisely T73, T7351, T74, T7451, T76, T7651, T77, T7751, T79 and T7951, are of particular interest to the present invention.

A person skilled in the art knows that resistance to stress and/or exfoliating corrosion is often related to the metallurgical temper. For example, it is described in EN515 that the stress corrosion resistance and the exfoliating corrosion resistance improve with increasing over-aging, in the order T79 (and T7951), T76 (and T7651), T74 (and T7451), T73 (and T7351) with T79 (and T7951) exhibiting the worst corrosion resistance and T73 (and T7351) exhibiting the best corrosion resistance.

In accordance with the invention in the pre-welding condition the 5xxx-series alloy part is in an "H" temper, i.e. in an H1, H2 or H3 temper. An H1 temper means that the alloy part is strain hardened. An H2 temper means that the alloy part is strain hardened and partially annealed. An H3 temper means that the alloy part is strain hardened and stabilized (e.g. via low temperature heating). In some embodiments, the alloy part may be strain hardened in accordance with typical H1X, H2X or an H3X temper practices, where X is a whole number from 0 to 9. This second digit following the designations H1, H2, H3 indicates the final degree of strain hardening. The number 8 is assigned to tempers having a final degree of strain-hardening equivalent to that resulting from approximately 75% reduction in area. Tempers between that of the 0 temper (annealed and 8 (full hard) are designated by numbers 1 through 7. A number 4 designation is considered half-hard; number 2 is considered quarter-hard; and the number 6 is three-quarter hard. When the number is odd, the limits of ultimate tensile strength are about halfway between those of the even numbered tempers.

In a preferred embodiment the 5xxx-series alloy member is in H1X temper, and more in particular an H1X temper selected from the group of H111, H116, and H128. For this temper the alloy member has undergone a pre-weld heat treatment to protect the alloy member in both the pre-weld and post-weld condition from intergranular corrosion after a sensitizing treatment. For defence applications such as armoured vehicles suitable tempers include also the H131 and H136 temper.

By a "post-welding heat treatment" or "post-weld heat treatment", it is meant a thermal treatment of the welded structural member. The optional post-weld thermal treatment should be designed so as to obtain that the whole welded structural member has in all distinctive zones such as the weld and the heat-affected zone a sufficient good corrosion resistance. The optional post-weld heat treatment may optionally comprise several steps at various temperatures. In these steps the welded structural member will be heated to temperatures in a range of about 50°C to 200°C in total for about up to 10 hours, preferably in a range of 100°C to 180°C for up to 8 hours, and cooled to ambient temperature. A preferred lower-limit is 0.5 hour and more preferably at least 1 hour.

As stated in the description of related art, certain required properties of structural components typically are difficult to optimize at the same time independently of one another. This is particularly true for properties such as "static mechanical properties" or "strength" (particularly the ultimate strength UTS and the yield stress YS) and "damage tolerance" (particularly toughness and resistance to crack propagation).

In an embodiment of the invention the structural member includes at least an upper part and a lower part, wherein said upper part comprises the 7XXX-series alloy part and preferably the lower part comprises the 5XXX-series alloy part.

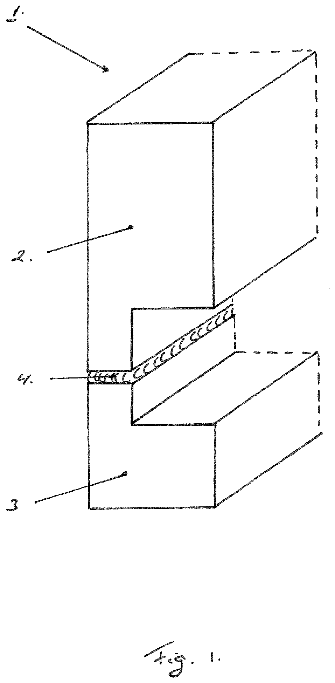

Referring to Fig. 1, there is shown a schematic perspective view of a welded structural member 1 having an upper part 2 and a lower part 3 joint to each other by means of welding at weld line 4.

In an embodiment of the invention near the weld location the thickness of the respective first and second part is each in the range of 40 to 70 mm, for example 50 mm or 60 mm. The weld line may extend over a length of 10 meters or more, for example 15 m or 17 m.

In an embodiment of the invention the AA7xxx-series part is an aluminium alloy consisting of the following composition, in wt.%:

| | |
|---|---|
| Zn | 5.1 to 9.4, preferably 5.7 to 8.0, |
| Cu | 0.8 to 2.6, preferably 1.2 to 2.2, |
| Mg | 1.5 to 2.9, preferably 1.6 to 2.3, |
| Zr | 0.05 to 0.25, preferably 0.1 to 0.2, |
| Cr | < 0.06, preferably <0.03, |
| Mn | <0.06, preferably <0.03, |
| Ti | < 0.2, preferably <0.12, |
| Fe | < 0.15, preferably < 0.12, |
| Si | < 0.15, preferably < 0.10, |

unavoidable impurities each <0.05, total <0.15, balance aluminium.

In a preferred embodiment the AA7XXX-series part is selected from the group of 7050, 7155 and 7181.

In a preferred embodiment the AA7XXX-series part is made from a plate product.

In an embodiment of the invention the AA5xxx-series alloy part is an aluminium alloy consisting of the following composition, in wt.%:

| | |
|---|---|
| Mg | 3.0 to 6.0, preferably 3.2 to 5.7, more preferably 3.8 to 5.4, |
| Mn | 0.2 to 1.4, preferably 0.4 to 1.2, |
| Zn | < 0.9, preferably <0.7, more preferably 0.15 to 0.7, |
| Zr | < 0.3, preferably 0.05 to 0.25, |
| Cr | < 0.3 |
| Sc | < 0.6, preferably < 0.4, |
| Ti | < 0.3 |
| Fe | < 0.5, preferably < 0.25, more preferably < 0.15, |
| Si | < 0.45, preferably < 0.2, more preferably < 0.15, |
| Ag | < 0.4 |
| Er | < 0.4 |
| Cu | < 0.25, preferably < 0.1, more preferably < 0.05, |

unavoidable impurities each <0.05, total <0.15, balance aluminium.

In a preferred embodiment the AA5XXX-series aluminium alloy part is selected from the group of 5024, 5028 and 5059. A most preferred alloy is 5059.

In an embodiment the AA5XXX-series aluminium alloy part is made from a plate product or an extruded product. In a more preferred embodiment the part is made from a plate product.

In one embodiment of the present invention, the at least two parts are adjacent. By adjacent, it is meant that the at least two parts have edges or sides in abutment with each other. Adjacent assemblies include, for example: side-by-side, butt joint, lap joint, top of each other, T-joint, edge joint, and corner joint.

Among known welding techniques such as resistance spot welding, flash butt welding, laser welding, arc welding, electron-beam welding friction welding and friction stir welding, friction stir welding is often used in an advantageous embodiment of the present invention.

Friction stir welding ("FSW") was developed and patented in the early 1990s by The Welding Institute in the United Kingdom and has been used in assembling aluminium alloys. A key principle of friction stir welding is that it is a solid-state welding technique by applying strong shear to the metal using a rotating tool that stirs the two materials to be assembled. First, the yield stress is reduced by heating the metal by applying friction using a shoulder portion of the rotating tool to the metal surface, and the tool is then moved to make the weld by gradually moving it in a forward direction. The shoulder portion of the tool also contains the metal and maintains the pressure to avoid metal ejection outside the welded zone.

It is known that friction stir welding is capable of avoiding hot cracking, which in particular means that aluminium alloys, in particular in the form of plate, that may have previously been considered as not being weldable by fusion, can now be welded.

In a preferred embodiment the 7XXX-series part is placed on the advancing side of the friction stir weld and the 5XXX-series part is placed on the retreating side of the friction stir weld. The FSW parameters, in particular welding speed and rotational speed, are optimized to gain highest strength under cold condition. A preheating and cooling during FSW welding can be applied to increase both strength and corrosion resistance.

In the present invention, the structural member is used in aircraft construction, and comprises a rib or a spar. The structural assembly of ribs and spars obtained from a method of the present invention is particularly advantageous. In a preferred embodiment of the present invention, a rib or a spar includes at least an upper part and a lower part, wherein the upper part comprises one selected from the group of 7050-T73, 7050-T76, 7050-T79, 7181-T73, 7181-T76, 7181-T79, 7175-T73, 7175-T76, and 7175-T79, and the lower part in the pre-welded condition comprises one selected from the group of 5059-H111, 5059-H116, 5059-H131, 5059-H132, 5024-H116 and 5028-H116.

According to another aspect of the invention there is provided a method of manufacturing a welded structural member comprising at least two aluminium alloy parts displaying different property balances according to any one of claims 1 to 12, comprising the steps of welding said at least two parts, preferably by means of friction stir welding, and optionally subjecting said welded structural member to a post-weld heat treatment conferring an increased corrosion against stress corrosion, exfoliation corrosion or intergranular corrosion of the welded structural member in comparison to the as-welded condition and without substantially affecting the T7 condition of the 7xxx-series alloy part, and at least in the pre-welding condition the 5xxx-series part is in a Hx-temper with x being 1, 2 or 3, and providing damage tolerance to said welded structural member.

The welded structural member obtained by the method provides a careful balance in relevant engineering properties whereby the 7XXX-series alloy part provides most of the strength to the welded structural member, the 5XXX-series alloy part provides the required fatigue crack growth rate resistance and S/N fatigue resistance, both the 7XXX-series alloy and the 5XXX-series alloy have a good corrosion resistance. The two alloy parts have closely related or similar corrosion potentials, hence the risk on contact corrosion is minimised in any contact zone of the two alloy parts. The optional post-weld heat treatment is to ensure that the whole welded structural member has in all distinctive zones such as the weld and the heat-affected zone a sufficient good corrosion resistance.

In another aspect of the invention it relates to a method of use and to the use of the described 5xxx-series alloy and of the preferred embodiments and in the described temper and the described preferred tempers in a welded structural member according to the invention or in a welded structural member obtained by the method according to this invention. The welded structural member is a spar or a rib of an aircraft construction.

Surprisingly the 5xxx-series alloy may provide damage tolerance to said welded structural member, while still offering a sufficiently good overall corrosion resistance to the welded structural member. The 5XXX-series alloy may offer a more cost effective solution to manufacturing such welded structural members compared to the use of for example Al-Cu-Li alloys.

In another aspect of the invention it relates to a method of use and to the use of the described 7XXX-series alloy and of the preferred embodiments and in the described temper and the described preferred tempers in a welded structural member according to the invention or in a welded structural member obtained by the method according to this invention. The welded structural member is a spar or a rib of an aircraft construction.

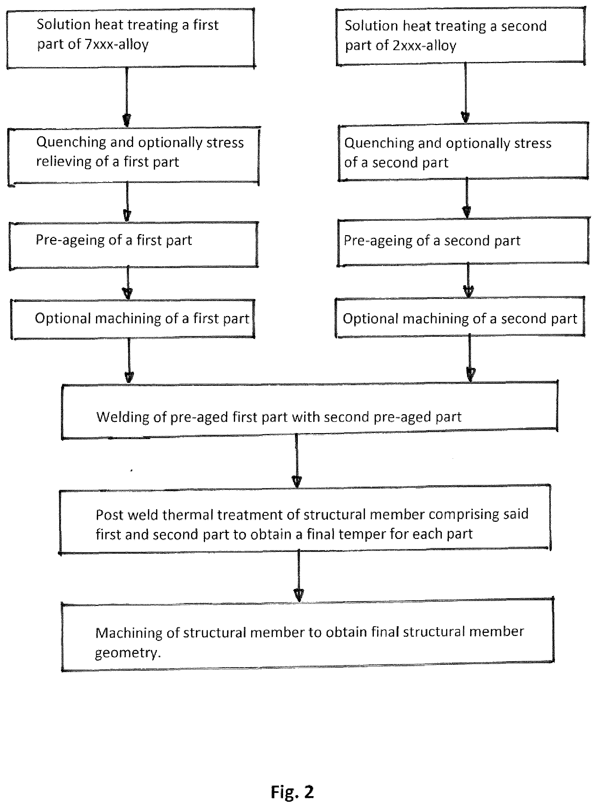

Referring to Fig. 2, there is shown a sequence of processing steps that are used in the method disclosed in prior art patent document US-8,420,226. A first part of an AA7XXX-series alloy is solution heat treated, quenched and optionally stress relieved and artificially aged and a second part an AA2XXX-series alloy is also solution heat treated, quenched and optionally stress relieved and artificially aged. Optionally for both parts a first machining step is carried out either before or after the pre-ageing. The first and second part are then welded together to form a welded structural member, which is optionally then subjected to a post welding heat treatment to obtain a final temper for each part. This heat treated welded structural member is then machined to its final shape.

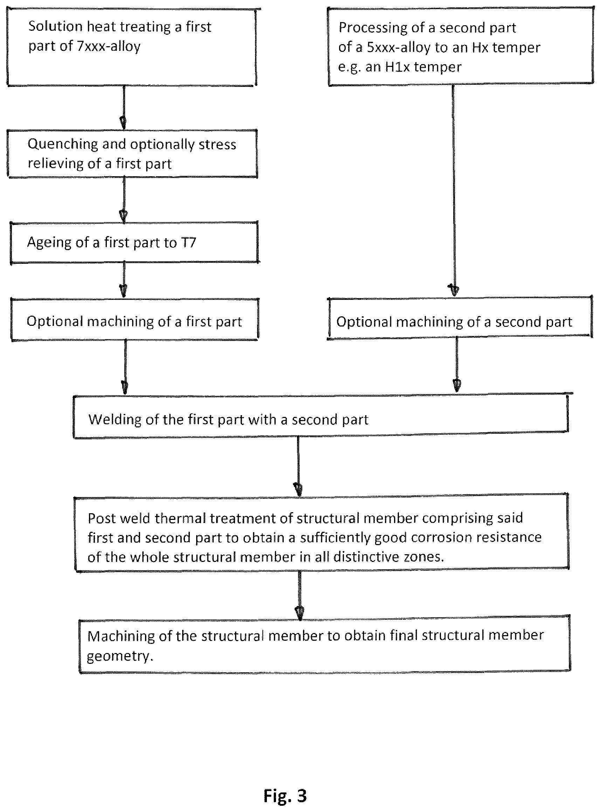

Referring to Fig 3, there is shown a sequence of processing steps that are used in an embodiment of the present invention. A first part of an AA7xxx-series alloy is solution heat treated, quenched and optionally stress relieved and artificially aged to a T7 temper. A second part of an AA5xxx-series alloy is processed to an H1, H2 or H3 temper, and more preferably to an H1X temper, such as 5059-H131. Optionally for both parts a first machining step is carried out, for the AA7xxx-series part either before or after the ageing. The first and second part are then welded together to form a welded structural member, preferably by means of friction stir welding, which is then optionally subjected to a post-welding heat treatment such that the whole welded structural member has in all distinctive zones such as the weld and the heat-affected zone a sufficient good corrosion resistance. This structural member, and optionally being post-weld heat treated, can then be machined to its final shape in a similar manner as would be done for a mono-alloy plate material such as for example from AA7050-T7651.

The invention is not limited to the embodiments described before, which may be varied widely within the scope of the invention as defined by the appending claims.

## Claims

1. A welded structural member comprising at least two aluminium alloy parts displaying different property balances, said at least two parts being welded,
wherein at least one of said at least two parts comprises a 7xxx-series alloy part aged to a final T7-condition,
and wherein at least one of said at least two parts comprises a 5xxx-series alloy part in a Hx-temper with x being 1, 2 or 3, and having a yield strength in the range of 170 to 300 MPa and an ultimate tensile strength in a range of 330 to 370 MPa,
and wherein at least the 7xxx-series part is selected to impart strength properties to said welded structural member including after an optional post-welding heat treatment,
and at least the 5xxx-series part is selected such that the temper is optimized to provide damage tolerance or mine blast protection to said welded structural member,
wherein said welded structural member has undergone optionally a post-welding heat treatment conferring a sensitization of any of the welded 5xxx-series alloy parts and without substantially affecting the final T7 condition of the 7xxx-series alloy part,
wherein said structural member comprises a spar or a rib suitable for use in aircraft construction.

2. A welded structural member according to claim 1, wherein said at least two parts are adjacent.

3. A welded structural member according to claim 1 or 2, wherein said parts are welded by friction stir welding.

4. A welded structural member according to 3, wherein the 7xxx-series part is placed on the advancing side of the friction stir weld.

5. A welded structural member according to any one of claims 1 to 4, wherein the post-welding heat treatment is carried out and comprises of heating the welded structural member to a temperature in a range of 50°C to 200°C for up to 10 hours followed by cooling to ambient temperature.

6. A welded structural member according to any one of claims 1 to 5, wherein said structural member includes at least an upper part and a lower part, and wherein said upper part is an 7xxx-series aluminium alloy consisting of, in wt.%,
| | |
|---|---|
| Zn | 5.1 to 9.4, preferably 5.7 to 8.0, |
| Cu | 0.8 to 2.6, preferably 1.2 to 2.2, |
| Mg | 1.5 to 2.9, preferably 1.6 to 2.3, |
| Zr | 0.05 to 0.25, preferably 0.1 to 0.2, |
| Cr | < 0.06, preferably <0.03, |
| Mn | <0.06, preferably <0.03, |
| Ti | < 0.2, preferably <0.12, |
| Fe | < 0.15, preferably < 0.12, |
| Si | < 0.15, preferably < 0.10, |
unavoidable impurities each <0.05, total <0.15, balance aluminium.

7. A welded structural member according to any one of claims 1 to 6, wherein the 7xxx-series alloy part has been aged to a temper selected from the group of T73, T7351, T74, T7451, T76, T7651, T79, and T7951.

8. A welded structural member according to any one of claims 1 to 7, wherein said structural member includes at least an upper part and a lower part, and wherein lower part is a 5xxx-series aluminium alloy consisting of, in wt.%:
| | |
|---|---|
| Mg | 3.0 to 6.0, preferably 3.2 to 5.7, |
| Mn | 0.2 to 1.4 |
| Zn | < 0.9 |
| Zr | < 0.3 |
| Cr | < 0.3 |
| Sc | < 0.6 |
| Ti | < 0.3 |
| Fe | < 0.5, preferably < 0.25, |
| Si | < 0.45, preferably < 0.2, |
| Ag | < 0.4 |
| Er | < 0.4 |
| Cu | < 0.25, |
unavoidable impurities each <0.05, total <0.15, balance aluminium.

9. A welded structural member according to any one of claims 1 to 8, wherein said structural member includes at least an upper part and a lower part, and wherein lower part is a 5xxx-series aluminium alloy selected from the group of 5024, 5028 and 5059.

10. A welded structural member according to any one of claims 1 to 9, wherein the 5xxx-series alloy part in a the pre-welding condition is in an H1x temper, and more preferably a temper selected from the group of H111, H116, and H128.

11. A method of manufacturing a welded structural member comprising at least two aluminium alloy parts displaying different property balances according to any one of claims 1 to 10, comprising the steps of welding said at least two parts, preferably by means of friction stir welding, and subjecting said welded structural member to a post-weld heat treatment, wherein the post-welding heat treatment comprises of heating the welded structural member to a temperature in a range of 50°C to 200°C for up to 10 hours followed by controlled cooling to ambient temperature, and
at least in the pre-welding condition the 5xxx-series part is in a Hx-temper with x being 1, 2 or 3, and providing damage tolerance to said welded structural member.

12. Use of a 5xxx-series aluminium alloy consisting of, in wt.%:
| | |
|---|---|
| Mg | 3.0 to 6.0, preferably 3.2 to 5.7, |
| Mn | 0.2 to 1.4 |
| Zn | < 0.9 |
| Zr | < 0.3 |
| Cr | < 0.3 |
| Sc | < 0.6 |
| Ti | < 0.3 |
| Fe | < 0.5, preferably < 0.25, |
| Si | < 0.45, preferably < 0.2, |
| Ag | < 0.4 |
| Er | < 0.4 |
| Cu | < 0.25, |
unavoidable impurities each <0.05, total <0.15, balance aluminium, in a welded structural member according to any one of claims 1 to 10 or a welded structural member obtained by the method according to claim 11.

## Patentansprüche

1. Geschweißtes Strukturelement, das mindestens zwei Bauteile aus Aluminiumlegierung aufweist, die unterschiedliche Eigenschaftsbilanzen haben, wobei die mindestens zwei Bauteile geschweißt sind,
wobei mindestens eines der mindestens zwei Bauteile ein Bauteil aus einer Legierung der 7xxx-Serie umfasst, die auf einen endgültigen T7-Zustand gehärtet ist,
und wobei mindestens eines der mindestens zwei Bauteile ein Bauteil aus einer Legierung der 5xxx-Serie in einem Hx-Zustand umfasst, mit x gleich 1, 2 oder 3, und mit einer Streckgrenze im Bereich von 170 bis 300 MPa und einer endgültigen Zugfestigkeit in einem Bereich von 330 bis 370 MPa, und wobei mindestens das Bauteil der 7xxx-Serie ausgewählt wird, um dem geschweißten Strukturelement Festigkeitseigenschaften zu verleihen, einschließlich einer optionalen Wärmenachbehandlung,
und mindestens das Bauteil der 5xxx-Serie so gewählt wird, dass der Härtegrad optimiert wird, um dem geschweißten Strukturelement eine Schadenstoleranz oder einen Minenexplosionsschutz zu verleihen,
wobei das geschweißte Strukturelement optional eine Wärmenachbehandlung erfahren hat, die jedem der geschweißten Bauteile der Legierung der 5xxx-Serie eine Sensibilisierung verleiht und ohne im Wesentlichen den endgültigen T7-Zustand des Bauteils aus der Legierung der 7xxx-Serie zu beeinträchtigen,
wobei das Strukturelement einen Holm oder eine Rippe zur Verwendung im Flugzeugbau umfasst.

2. Geschweißtes Strukturelement nach Anspruch 1, wobei die mindestens zwei Bauteile benachbart sind.

3. Geschweißtes Strukturelement nach Anspruch 1 oder 2, wobei die Bauteile durch Rührreibschweißen geschweißt werden.

4. Geschweißtes Strukturelement nach Anspruch 3, wobei das Bauteil der 7xxx-Serie auf der vorlaufenden Seite der Rührreibschweißung angeordnet ist.

5. Geschweißtes Strukturelement nach einem der Ansprüche 1 bis 4, wobei die Wärmenachbehandlung ausgeführt wird und aus dem Erwärmen des geschweißten Strukturelements auf eine Temperatur in einem Bereich von 50°C bis 200°C für bis zu 10 Stunden gefolgt von einem Abkühlen auf Umgebungstemperatur besteht.

6. Geschweißtes Strukturelement nach einem der Ansprüche 1 bis 5, wobei das Strukturelement mindestens ein oberes Bauteil und ein unteres Bauteil enthält, und wobei das obere Bauteil eine Aluminiumlegierung der 7xxx-Serie ist, die in Gew.-% besteht aus:
| | |
|---|---|
| Zn | 5,1 bis 9,4, vorzugsweise 5,7 bis 8,0, |
| Cu | 0,8 bis 2,6, vorzugsweise 1,2 bis 2,2, |
| Mg | 1,5 bis 2,9, vorzugsweise 1,6 bis 2,3, |
| Zr | 0,05 bis 0,25, vorzugsweise 0,1 bis 0,2, |
| Cr | < 0,06, vorzugsweise < 0,03, |
| Mn | < 0,06, vorzugsweise < 0,03, |
| Ti | < 0,2, vorzugsweise < 0,12, |
| Fe | < 0,15, vorzugsweise < 0,12, |
| Si | < 0,15, vorzugsweise < 0,10, |
unvermeidliche Verunreinigungen je <0,05, insgesamt <0,15, Rest Aluminium.

7. Geschweißtes Strukturelement nach einem der Ansprüche 1 bis 6, wobei das Bauteil aus der Legierung der 7xxx-Serie auf einen Härtegrad gehärtet wurde, der ausgewählt wird aus der Gruppe von T73, T7351, T74, T7451, T76, T7651, T79 und T7951.

8. Geschweißtes Strukturelement nach einem der Ansprüche 1 bis 7, wobei das Strukturelement mindestens ein oberes Bauteil und ein unteres Bauteil enthält, und wobei das untere Bauteil eine Aluminiumlegierung der 5xxx-Serie ist, die in Gew.-% besteht aus:
| | |
|---|---|
| Mg | 3,0 bis 6,0, vorzugsweise 3,2 bis 5,7, |
| Mn | 0,2 bis 1,4, |
| Zn | < 0,9, |
| Zr | < 0,3, |
| Cr | < 0,3, |
| Sc | < 0,6, |
| Ti | < 0,3, |
| Fe | < 0,5, vorzugsweise < 0,25, |
| Si | < 0,45, vorzugsweise < 0,2, |
| Ag | < 0,4, |
| Er | < 0,4, |
| Cu | < 0,25, |
unvermeidliche Verunreinigungen je <0,05, insgesamt <0,15, Rest Aluminium.

9. Geschweißtes Strukturelement nach einem der Ansprüche 1 bis 8, wobei das Strukturelement mindestens ein oberes Bauteil und ein unteres Bauteil enthält, und wobei das untere Bauteil eine Aluminiumlegierung der 5xxx-Serie ist, ausgewählt aus der Gruppe von 5024, 5028 und 5059.

10. Geschweißtes Strukturelement nach einem der Ansprüche 1 bis 9, wobei das Bauteil aus der Legierung der 5xxx-Serie im Vorschweißzustand in einem H1x-Zustand und noch bevorzugter einem Zustand ausgewählt aus der Gruppe von H111, H116 und H128 ist.

11. Verfahren zur Herstellung eines geschweißten Strukturelements, das mindestens zwei Bauteile aus Aluminiumlegierung aufweist, die unterschiedliche Eigenschaftsbilanzen nach einem der Ansprüche 1 bis 10 haben, das die Schritte des Schweißens der mindestens zwei Bauteile, vorzugsweise mittels Rührreibschweißen, und des Unterziehens des geschweißten Strukturelements einer Wärmenachbehandlung aufweist, wobei die Wärmenachbehandlung aus dem Erwärmen des geschweißten Strukturelements bis auf eine Temperatur in einem Bereich von 50°C bis 200°C für bis zu 10 Stunden, gefolgt von gesteuertem Abkühlen auf Umgebungstemperatur besteht, und
mindestens im Vorschweißzustand das Bauteil der 5xxx-Serie in einem Hx-Zustand ist, wobei x 1, 2 oder 3 ist, und dem geschweißten Strukturelement Schadenstoleranz verliehen wird.

12. Verwendung einer Aluminiumlegierung der 5xxx-Serie bestehend aus, in Gew.-%,:
| | |
|---|---|
| Mg | 3,0 bis 6,0, vorzugsweise 3,2 bis 5,7, |
| Mn | 0,2 bis 1,4, |
| Zn | < 0,9, |
| Zr | < 0,3, |
| Cr | < 0,3, |
| Sc | < 0,6, |
| Ti | < 0,3 |
| Fe | < 0,5, vorzugsweise < 0,25, |
| Si | < 0,45, vorzugsweise < 0,2, |
| Ag | < 0,4 |
| Er | < 0,4 |
| Cu | < 0,25, |
unvermeidliche Verunreinigungen je <0,05, insgesamt <0,15, Rest Aluminium,
in einem geschweißten Strukturelement nach einem der Ansprüche 1 bis 10 oder einem geschweißten Strukturelement erhalten durch das Verfahren nach Anspruch 11.

## Revendications

1. Élément structurel soudé comprenant au moins deux parties en alliage d'aluminium présentant différents équilibres de propriété, lesdites au moins deux parties étant soudées, dans lequel au moins une desdites au moins deux parties comprend une partie en alliage de la série 7xxx vieillie à une condition finale T7,
et dans lequel au moins une desdites au moins deux parties comprend une partie en alliage de la série 5xxx dans une températion Hx où x est 1, 2 ou 3, et ayant une limite d'élasticité dans la plage de 170 à 300 MPa et une résistance ultime à la traction dans une plage de 330 à 370 MPa,
et dans lequel au moins la partie de la série 7xxx est choisie pour conférer des propriétés de solidité audit élément structurel soudé, y compris après un traitement thermique post-soudage optionnel,
et au moins la partie de la série 5xxx est choisie de sorte que la temperation est optimisée pour fournir une tolérance aux dommages ou une protection contre les explosions minières audit élément structurel soudé,
dans lequel ledit élément structurel soudé a subi en option un traitement thermique post-soudage conférant une sensibilisation de l'une quelconque des parties d'alliage soudées de la série 5xxx sans affecter sensiblement la condition finale T7 de la partie d'alliage de la série 7xxx,
dans lequel ledit élément structurel comprend un longeron ou une nervure adaptés pour une utilisation dans la construction aéronautique.

2. Élément structurel soudé selon la revendication 1, dans lequel lesdites au moins deux parties sont adjacentes.

3. Élément structurel soudé selon la revendication 1 ou 2, dans lequel lesdites parties sont soudées par soudage par friction-agitation.

4. Élément structurel soudé selon la revendication 3, dans lequel la partie de la série 7xxx est placée sur le côté d'avancement de la soudure par friction-agitation.

5. Élément structurel soudé selon l'une quelconque des revendications 1 à 4, dans lequel le traitement thermique post-soudage est exécuté et comprend la chauffe de l'élément structurel soudé à une température dans une plage de 50 °C à 200 °C pour jusqu'à 10 heures, suivie par un refroidissement jusqu'à température ambiante.

6. Élément structurel soudé selon l'une quelconque des revendications 1 à 5, dans lequel ledit élément structurel inclut au moins une partie supérieure et une partie inférieure, et
dans lequel ladite partie supérieure est un alliage d'aluminium de la série 7xxx constitué par, en % pondéral,
| | |
|---|---|
| Zn | 5,1 à 9,4, de préférence 5,7 à 8,0, |
| Cu | 0,8 à 2,6, de préférence 1,2 à 2,2, |
| Mg | 1,5 à 2,9, de préférence 1,6 à 2,3, |
| Zr | 0,05 à 0,25, de préférence 0,1 à 0,2, |
| Cr | < 0,06, de préférence < 0,03, |
| Mn | < 0,06, de préférence < 0,03, |
| Ti | < 0,2, de préférence < 0,12, |
| Fe | < 0,15, de préférence < 0,12, |
| Si | < 0,15, de préférence < 0,10, |
des impuretés inévitables allant chacune jusqu'à 0,05, avec un total jusqu'à 0,15, le reste étant de l'aluminium.

7. Élément structurel soudé selon l'une quelconque des revendications 1 à 6, dans lequel la partie d'alliage de la série 7xxx a été vieillie à une trempération choisie parmi le groupe constitué par T73, T7351, T74, T7451, T76, T7651, T79 et T7951.

8. Élément structurel soudé selon l'une quelconque des revendications 1 à 7, dans lequel ledit élément structurel inclut au moins une partie supérieure et une partie inférieure, et
dans lequel la partie inférieure est un alliage d'aluminium de la série 5xxx constitué par, en % pondéral :
| | |
|---|---|
| Mg | 3,0 à 6,0, de préférence 3,2 à 5,7, |
| Mn | 0,2 à 1,4 |
| Zn | < 0,9 |
| Zr | < 0,3 |
| Cr | < 0,3 |
| Sc | < 0,6 |
| Ti | < 0,3 |
| Fe | < 0,5, de préférence <0,25, |
| Si | < 0,45, de préférence < 0,2, |
| Ag | < 0,4 |
| Er | < 0,4 |
| Cu | < 0,25, |
des impuretés inévitables allant chacune jusqu'à 0,05, avec un total jusqu'à 0,15, le reste étant de l'aluminium.

9. Élément structurel soudé selon l'une quelconque des revendications 1 à 8, dans lequel ledit élément structurel inclut au moins une partie supérieure et une partie inférieure, et
dans lequel la partie inférieure est un alliage d'aluminium de la série 5xxx choisie parmi le groupe constitué par 5024, 5028 et 5059.

10. Élément structurel soudé selon l'une quelconque des revendications 1 à 9, dans lequel la partie d'alliage de la série 5xxx, dans une condition de pré-soudage, est dans une températion H1x, et plus préférablement une températion choisie parmi le groupe constitué par H111, H116 et H128.

11. Procédé de fabrication d'un élément structurel soudé comprenant au moins deux parties en alliage d'aluminium présentant différents équilibres de propriété selon l'une quelconque des revendications 1 à 10,
comprenant les étapes constituant à souder lesdites au moins deux parties, de préférence au moyen d'un soudage par friction-agitation, et soumettre ledit élément structurel soudé à un traitement thermique post-soudage, dans lequel le traitement thermique post-soudage comprend la chauffe de l'élément structurel soudé à une température dans une plage de 50 °C à 200 °C pour jusqu'à 10 heures, suivie par un refroidissement commandé jusqu'à température ambiante, et
au moins dans la condition de pré-soudage, la partie de la série 5xxx est dans une températion Hx où x est 1, 2 ou 3, et confère une tolérance aux dommages audit élément structurel soudé.

12. Utilisation d'un alliage d'aluminium de la série 5xxx constitué par, en % pondéral :
| | |
|---|---|
| Mg | 3,0 à 6,0, de préférence 3,2 à 5,7, |
| Mn | 0,2 à 1,4 |
| Zn | < 0,9 |
| | |
|---|---|
| Zr | < 0,3 |
| Cr | < 0,3 |
| Sc | < 0,6 |
| Ti | < 0,3 |
| Fe | < 0,5, de préférence < 0,25, |
| Si | < 0,45, de préférence < 0,2, |
| Ag | < 0,4 |
| Er | < 0,4 |
| Cu | < 0,25, |
des impuretés inévitables allant chacune jusqu'à 0,05, avec un total jusqu'à 0,15, le reste étant de l'aluminium,
dans un élément structurel soudé selon l'une quelconque des revendications 1 à 10 ou dans un élément structurel soudé obtenu par le procédé selon la revendication 11.
